# EUROPEAN PATENT APPLICATION

(11) **EP 4 032 871 A1**
(43) Date of publication of application: **27.07.2022**
(21) Application number: 22000011.1
(22) Date of filing: 18.01.2022
(51) Int. Cl.: C05D 1/00, C05F 9/00, C05F 11/00, C05G 5/40, A01G 24/44, A01G 13/00

(54) **PHYSICAL- CHEMICAL PROCESS FOR PRODUCTION OF AN ORGANIC FERTILIZER AND A BIODEGRADABLE SELF-SUPPORTING MATERIAL AND THEIR USE**

(30) Priority: 21.01.2021 IT 202100000989; 29.04.2021 IT 202100066440 U; 09.12.2021 IT 202100386629 U
(71) Applicant: Ferulli, Marco, 72020 Cellino San Marco (IT)
(72) Inventor: Ferulli, Marco, 72020 Cellino San Marco (IT)

(57) **Abstract**

A particular reference of the invention is the aspect of carbon dioxide emissions (CO₂), both for the chemical-physical process and for the nature of the reagents involved, which are zeroed with respect to the current solid organic waste and/or solid biomass treatment processes. Furthermore, the chemical-physical process of the present invention makes use of very short treatment times and does not need heat sources with impacting CO₂ emissions; the process itself does not emit CO₂, it totally recycles the water and leads to a structurally simple and economical treatment and transformation plant. This process has the advantage of not emitting odors and of using natural, renewable reagents, allowed in organic farming, with a neutral carbon footprint and which are easily manageable in terms of safety for health and the environment. The chemical-physical process aims to obtain two end products free of pathogenic microorganisms, free of phytotoxicity and free from vectors and/or viable seeds derived from solid organic waste and/or treated solid biomass, and these products are: an organic chelate of potassium fertilizer and a biodegradable self-supporting material, both innovative for their composition, structure and use. The use of the two aforementioned products in the agronomic field makes it possible to implement an agronomic technique that protects the soil and restores its fertility at each crop succession; this use allows to vary or not, according to the different agronomic needs, the pH value of the circulating solution, the C/N ratio of the soil, to maximize the nitrogen fixing process of the bacteria naturally present in the soil with dedicated crops in succession and in the at the same time increase the strength of the soil (soil depth). The chemical-physical process with zero CO₂emissions for the treatment and transformation of solid organic waste and/or solid biomass, and the agronomic use of the fertilizing organic potassium chelate and the biodegradable self-supporting material, are functionally connected in a system of capture and storage of CO₂ in the soil with significant technical, economic and environmental efficiencies. The transformation of solid organic waste and/or solid biomass into the aforementioned innovative products refers to the complete composition of solid organic waste and/or solid biomass and therefore not to parts, extracts or compounds isolated from them. The use of biodegradable self-supporting material in the pre-sown version in the agronomic field allows to maximize agricultural productions also with organic farming methods, bringing them on a par with the most recent soilless cultivation techniques, but with the advantage of being significantly cheaper, manageable and even more sustainable from an environmental point of view.

## Description

Object of the present invention is a chemical-physical process for the treatment and transformation of solid organic waste and/or solid biomasses, with the production of an organic fertilizer and a biodegradable self-supporting material and their use in agronomic and environmental fields.

In the agronomic and environmental field we can find a serious problem represented by the increasing emissions and accumulation of CO₂ in the atmosphere, which, in addition to the known anthropogenic activities, are due to the poor management of agricultural soil and agricultural residues.

Processes for the treatment of biomasses involving CO₂ emissions from composting processes or CO₂ emissions from the combustion of biogas from anaerobic digestion processes are known; also known are chemical-physical processes for the treatment of biomasses, aimed at the production of soil corrections or fertilizers, which provide for the use of reagents whose production involves emissions of CO₂ into the atmosphere, for example reagents such as calcium oxide or calcium hydroxide.

Other chimical-physical processes for the treatment of biomasses are known for the production of fertilizers in which, although using reagents having a neutral carbon footprint, these reagents are not such as to be effectively usable for the solid biomasses of the most varied types and at the same time guarantee the sanitization of said solid biomasses, except with the use of other synthetic chemical compounds, which in turn affect the environment; In the document with a deposit number BO2012A000002, for example, the use of calcium carbonate as a powdery substance is used for the treatment of "preferably liquid and/or pumpable biomasses 6% - 15% s.s." and the sanitization of such biomasses is used for the production of fertilizers by the use of hydrogen peroxide.

Other chemical-physical processes are known in which the production of biodegradable self-supporting materials of natural derivation involves the use of chemical reagents with a high risk of danger to human health and having positive carbon footprint and such chemical-physical processes do not involve the direct use of the biomasses as such, but only after previous industrial processes of the same; in the document with deposit number GE2012A000028, for example, vegetable and animal fibers are used for the production of a biodegradable composite material in which said vegetable fibers are in the form of raw fiber, yarns or in the form of fabric, while the reagents are identified between sodium hydroxide, potassium hydroxide, calcium hydroxide, barium hydroxide, magnesium hydroxide, sulfuric acid.

Furthermore, in the agronomic field, synthetic mulching materials such as polyethylene films are known, the use of which is notoriously not eco-sustainable, or biodegradable mulching materials whose formulation requires bioplastic to the disadvantage of foodstuffs for human nutrition as in the case of the use of corn starch for the formulation of such bioplastic materials. Also known are mulching materials which comprise in their composition, in addition to natural derivation substances, also polymeric synthetic film-forming agents, the latter derived from further not-eco-sustainable industrial processes; In the document with a deposit number M12015A000209, for example, such a mulching composition comprises ligno-cellulosic biomass and a polymeric film-forming agent such as polyvinyl alcohol, polyvinyl acetate, urea resins, carboxymethylcellulose, dicyandiamide resins, stirene-acrylic copolymers or mixtures thereof.

Also in agronomic field, problems are increasingly common, such as: Depletion of soil fertility caused by the excessive use of synthetic chemicals, decrease of organic substance in the soil and by impactant mechanical processes; massive use of phytopharmaceuticals; water deficit and water consumption of crops.

The problems listed above are solved by the present invention by a chemical-physical process with zero CO₂ emissions for the treatment and transformation of solid organic waste and/or solid biomasses into products useful for agronomic purposes, such as an organic fertilizer and a biodegradable self-supporting material, the use of which allows the storage of carbon in agricultural soil.

Another object of the present invention is to provide a chemical-physical process for the treatment and transformation of solid organic waste and/or solid biomasses which provides for the use of reagents with neutral carbon footprint and which are such as to be able to treat all "solid" types of organic waste and/or biomasses, at the same time, it ensures the sanitization and the absence of phytotoxicity.

Another object of the present invention is to provide a chemical-physical process for the treatment and transformation of solid organic waste and/or solid biomasses which provides a melt of natural reagents and which have a low degree of physical danger, for health and for the environment.

Another object of the present invention is to provide a chemical-physical process for the treatment and transformation of solid organic waste and/or solid biomasses which provides for the total recovery of water for each cycle thereof and at the same time valorise the product of the filtration of the same water, in the form of a new type of organic fertilizer.

Another object of the present invention is to provide a new self-supporting material of natural derivation which is biodegradable and which concerns the direct transformation of solid organic waste and/or solid biomasses in their entirety without generating waste or resorting to the use of binding agents or structural aids, and which is such as to be able to perform in the agronomic field the function of sowing/planting bulbs, mulching and fertilizing.

Another object of the present invention is to provide an agronomic use of the products of the invention such as to eliminate the working of the soil and the cultivation treatments, drastically reduce the plant protection treatments and drastically reduce the water consumption of the crops.

Another object that is to be achieved by the present invention is a system for capturing and storing atmospheric CO₂ in agricultural soil which is in turn environmentally friendly, efficient and economical. These objects are achieved by the present invention, by means of a chemical-physical process for the treatment and transformation of solid organic waste and/or solid biomasses with the production of an organic fertilizer and a biodegradable self-supporting material and their use; this chemical-physical process, the products and their use are described as follows.

The chemical-physical process for the treatment and transformation of the solid organic waste and/or solid biomasses of the present invention provides such reagents: potassium carbonate (K₂CO₃), citric acid, and aqueous solutions thereof. The water is recycled and reused at each cycle. It should be noted that the industrial production of potassium carbonate has a neutral carbon footprint since the synthesis of its molecule from potassium hydroxide involves the recovery and incorporation of CO₂ molecules; citric acid is a compound having a neutral carbon footprint, renewable, of natural and ecological origin. Starting with an aqueous solution of potassium carbonate having a known pH value greater than 11 (pH > 11) and in the absence of oxygen; first, the solid organic waste and/or the solid biomasses can be ground or not ground according to their physical characteristics; the possible trituration has the purpose of allowing the potassium carbonate solution to permeate solid organic waste and/or solid biomasses throughout the organic matrix. Said solid organic waste and/or solid biomasses are therefore characterized on the basis of their moisture content and also according to their C/N ratio (carbon and nitrogen ratio) on the basis of known tabular data for each type of biomass or with data obtained analytically from samples upstream of the process; it is specified that in the presence of several types of solid organic waste and/or solid biomasses, these are mixed together until known C/N values are obtained. Subsequently, the solid organic waste and/or solid biomasses are immersed in such an aqueous solution of potassium carbonate having a known pH value greater than 11, in the absence of oxygen, and left in a suitable silo/reaction chamber for a period ranging from 10 to 20 days, at room temperature, and the pH value of such a solution is measured, which must be greater than 11 throughout
the treatment time. The treatment times can vary from 10 to 20 days as a function of this ambient temperature; it is specified that this ambient temperature is in the range from about 15°C to about 35°C, assuming that at ambient temperatures with decreasing values lower than 25°C the treatment time tends to increase to a maximum of 20 days, while at ambient temperatures with increasing values higher than 25°C, the treatment time tends to decrease to a minimum of 10 days. It is reasonable to consider having to carry out additions of K₂CO₃, during the treatment period, if the above solution, to the equilibrium with the different types of solid organic waste and/or solid biomasses, having a pH value lower than or equal to 11, in such a way as to bring and maintain said pH value at a value greater than 11 throughout the treatment time. At the end of the treatment, the organic substance reaches a balance with said potassium carbonate solution,
thus acquiring a known pH value higher than 11, equal to the pH of the alkaline solution itself. The treatment of solid organic waste and/or solid biomasses with the aqueous potassium carbonate solution having a known pH value greater than 11 and in the absence of oxygen results in partial and/or total basic hydrolysis and partial and/or total basic denaturation of the various organic components. The products of such hydrolysis and denaturation which due to their small dimensions settle or remain suspended in the alkaline solution at the end of the above described treatment are filtered and thus constitute the alkaline organic filtrate; the organic structures with a high degree of polymerization and having larger dimensions,
denatured and partially hydrolyzed, are instead destined to the production of the biodegradable self-supporting material. Thus, the resulting organic substance having larger sized polymer structures and thus treated has a known pH value greater than 11 and is conveyed into a press and molding system which provides for pressing and/or molding thereof in the form of sheets, panels, rolls, vases, panels, blocks or any other form and volume, given the high plasticity acquired by the organic substance following treatment with the aqueous potassium carbonate solution having a known pH value greater than 11 and in the absence of oxygen. The remaining alkaline solution, on the other hand, is reintegrated with the same alkaline solution recovered from the roughing and pressing of the aforesaid organic substance, is filtered, as
above obtaining an alkaline organic filtrate, and possibly corrected with further K₂CO₃ so as to restore a known pH value greater than 11 and reused in a new cycle of treatment of solid organic waste and/or solid biomasses in the absence of oxygen as described above. The biodegradable self-supporting material obtained by pressing and molding operations is alkaline, since it also contains K₂CO₃ molecules in its organic structures;
said biodegradable alkaline self-supporting material is dried at room temperature with dry air dryers,
for example, and the water recovered by drying the biodegradable alkaline self-supporting material is added to the alkaline organic filtrate having a known pH value greater than 11 and in the absence of oxygen. Such an alkaline organic filtrate is composed of an organic component, an organic component with potassium chelate, organic carbonates, potassium carbonate and traces of potassium
bicarbonate. After drying, the alkaline biodegradable self-supporting material thus obtained may or may not, depending on the pH values to be obtained therefrom, being immersed in an aqueous solution of citric acid having a known pH value of less than 1.8 and monitoring the absorption of this solution by the alkaline biodegradable self-supporting material as a function of varying the pH value of the solution;
the timing of this step is in the order of minutes. The new desired pH value of the biodegradable self-supporting material
is determined by adjusting the pH of the aqueous citric acid solution, which initially has a known pH value of less than 1.8, depending on the initial pH and already known of the alkaline biodegradable self-supporting material. Once a desired pH value has been reached, the biodegradable self-supporting material is removed from the citric acid solution and is again subjected to drying by, for example, dry air dryers; it is specified that the different forms which the alkaline biodegradable self-supporting material has acquired, following the pressing and molding steps, they are not altered during contact with the acid solution due to the high plasticity acquired previously and which determines a self-supporting property thereof, without the use of structural aids or chemical binders. The water derived from this second drying of the biodegradable self-supporting material is recovered and reintegrated with the citric acid starting solution having a known initial pH value of less than 1.8, after the latter is filtered. Subsequently said solution is corrected with further citric acid so as to restore a known pH value of less than 1.8, and stored in the absence of oxygen until a new treatment cycle of new alkaline biodegradable self-supporting material. From the filtration process an acid organic filtrate is obtained which is kept in the absence of oxygen, represented by the reaction products of the alkaline self-supporting material with the acid solution, and which contains an organic component, organic carbonates, potassium citrate and citric acid molecules. During the reaction phase of the alkaline biodegradable self-supporting material with the citric acid solution, CO₂ is also produced, since said alkaline biodegradable self-supporting material has also incorporated K₂CO₃ molecules into its organic structures; said CO₂ is produced according to the reaction:

   K₂CO₃ + citric acid → potassium citrate + CO₂ + H₂O ;
this CO₂ is recovered thanks to a suitable reaction chamber provided with a suction system and reacted with the organic alkaline filtrate (in aqueous solution), also containing K₂CO₃ molecules, causing the pH to be reduced and obtaining potassium bicarbonate according to the reaction:

   K₂CO₃ + CO₂ + H₂O → 2 KHCO₃;
the pH of the alkaline organic filtrate following this reaction is still basic and, to obtain new desired pH values and such as to be used in the agronomic field according to the different requirements, the acid organic filtrate recovered from the solution with citric acid having a known pH value, obtained after the reaction with the alkaline biodegradable self-supporting material, is added; the above-described organic alkaline filtrate and organic acid filtrate are then added and reacted to obtain an organic fertilizer potassium chelate, the pH of which will be known and determined intentionally by the starting percentages of the two organic alkaline and organic acid filtrates, if any, CO₂ which may be generated during the addition and reaction of the two organic filtrates, depending on the final pH value to be reached, is in any case reabsorbed by the organic component with the formation of organic carbonates. The entire addition process takes place in a suitable reaction chamber, and at the end of the reaction the organic precipitate with the desired pH is recovered (by sedimentation, centrifugation, filtration) and dried, thus obtaining an organic chelate of potassium fertilizer, while the water is recovered and reused in a new cycle by reintegrating the starting aqueous potassium carbonate solution having a known pH value greater than 11.

The basic hydrolysis products having a low degree of polymerization derived from the above-described chemical-physical process are filtered and characterized as a C/N ratio based on the solid organic waste and/or solid biomass starting from or their percentage combinations. The alkaline organic filtrate having known pH consists of an organic component, an organic component with potassium chelate, organic carbonates, potassium carbonate and traces of potassium bicarbonate; where required by the possible agronomic technical requirements to shift the pH of the circulating solution to desired pH values, for example for extremely acidic culture media or substrates, the above-mentioned alkaline organic filtrate may be dried, pelleted and used as such as organic fertilizer potassium chelate; or, to obtain new and different pH values, the above alkaline organic filtrate (in aqueous solution) is reacted with CO₂ from the reaction between the biodegradable alkaline self-supporting material and the citric acid solution having a known pH value of less than 1.8. This reaction with CO₂, in addition to recovering CO₂ in the form of potassium bicarbonate (KHCO₃), involves a first decrease in the pH value of the solution of the alkaline organic filtrate, a pH value which can still be shifted toward desired pH values for agronomic purposes; these pH values are then reached by adding to the alkaline organic filtrate (which reacted with CO₂ ) the acid organic filtrate having known C/N ratio and pH recovered from the citric acid solution after the reaction with the alkaline self-supporting material. This addition is carried out in a suitable reaction chamber and any desired final pH can be obtained in relation to the percentages of the two organic alkaline and organic acid filtrates; The possible CO₂ generated by the addition reaction of the two types of organic filtrate is re-absorbed with the formation of organic carbonates; the product resulting from the addition and reaction of the two alkaline and acid organic filtrates, until the desired pH is reached, It is then recovered from the aqueous solution by sedimentation/centrifugation/filtration and is dried and pelletized, thus constituting the organic chelate of fertilizer potassium with known pH and C/N ratio, composed of an organic component, an organic component with chelate potassium, organic carbonates and traces of KHCO₃ and/or citric acid. All the water is instead recovered and introduced into a new cycle by adding it to the aqueous solution of potassium carbonate starting having a known pH value greater than 11. It should be noted that where it is not necessary to mix and react the two organic alkaline and acid filtrates, for technical requirements such as to shift the extreme pH values of the solution circulating in the soil, the two organic filtrates can be pelletized as such and separately as organic fertilizer having a known pH value. In each of the cases described above, the organic chelate of potassium fertilizer thus obtained is such as to be admitted also in biological agriculture.

The biodegradable self-supporting material consists of organic structures with a high degree of polymerization, denatured and partially hydrolyzed obtained following the chemical-physical process described in this invention and can be mulching and/or pre-sowed, with fertilizer function, biodegradable and having different values of the known C/N ratio and pH. The C/N ratio of the biodegradable self-supporting material is easily traceable to the C/N ratio of the solid organic waste and/or solid biomass starting from or from percentage combinations thereof in the produced biodegradable self-supporting material. This is in the form of panels with lateral interlocking shapes and joints on the edges such as to adhere to each other on the surface of sufficiently leveled soils, irrespective of the slope of the soil, or it is also in the form of sheets, rolls, vases, panels (for soilless crops, seedlings), blocks or any other shape, size and volume. Such as can therefore function as mulching and fertilizer, container and fertilizer, and substrate and fertilizer; as a panel it can also be produced provided with holes, oculately defined with conical or cylindrical shape with a throttled base and which extend throughout the thickness of the panel of biodegradable self-supporting material, in which seeds and/or bulbs of plants can be inserted. Such holes therefore have variable size, number and arrangement on the surface of the panel of biodegradable self-supporting material according to the vegetable species to be sown and/or implanted, as can also vary the different thicknesses of the panel of biodegradable self-supporting material. Completely made of natural organic substances, the self-supporting material is biodegradable; within six months of laying on the soil, it becomes completely biodegraded, providing macro- and micronutrients resulting from its biodegradation, improving the structure and texture of the soil, and such biodegradation is partially subject to mineralization with nutritive function for plants but in a large part subject to humification, with proper formation of humus with chelating properties toward the cations reducing their washout, increasing the exchange capacity and buffer power of the soil. Moreover, the biodegradable self-supporting material is provided with a desired and known C/N and pH ratio and therefore it is possible to choose the value or combination of the values such as to shift the pH of the circulating solution and/or to shift the C/N ratio of the soil according to the cultivation requirements to maximize nitrogenation with dedicated cultures such as legumes.

The use of the biodegradable self-supporting material as a mulch or pre-sowed panel, on the soil sufficiently leveled and irrespective of the slope of the soil, allows to implement an agronomic technique which can be cyclically reproposed on the same soil at the same time, according to which, at the end of the culture cycle or at the end of the biodegradation of the biodegradable self-supporting material so that the mulching property is lost, a new laying on the ground of new biodegradable self-supporting material such as mulching or pre-sowed panel can be followed; from this it can be deduced that costly and impactant mechanical working of the soil and cultivation treatments can be eliminated in a single simple laying operation on the soil; the sowing and/or transplantation and fertilization operations are eliminated; furthermore, with reference to the biodegradable self-supporting material as a pre-sowed panel, high crop plant densities (like soilles crops) can be obtained since cultivation treatments such as inter-and-row mechanical diserb are eliminated and there is total freedom in arranging the plants on the surface of the soil; the agronomic technique with the use of the pre-produced biodegradable self-supporting material allows the use of

different plant species with reciprocal and repellent actions toward phytoparasites, reducing plant protection treatments, and it allows to have different cultures and productions greater and diversified on the same soil in the same time arc in spite of very small soil surfaces due to the high plant density and/or consociations; it also allows to carry out with extreme ease the crop rotation and the crop rotation. The distribution on the soil of the organic chelate of potassium fertilizer, with the desired pH and C/N ratio, before laying on the same soil of the biodegradable self-supporting material, whether this mulching or pre-sowed, further increases the supply of organic substance, the fertilizing function, The determination of the value of the final C/N ratio in the soil and, where appropriate, the corrective action of the pH of the circulating solution where necessary. The use of the biodegradable self-supporting material and/or of the organic chelate of potassium fertilizer, according to the different C/N ratio values selected, allows, over time, and according to suitable crop rotations of the various plant species, to maximize the natural process of nitrogen-fixing; moreover, the cyclic-culture stratification of the biodegradable self-supporting material allows the power of the soil (depth) to be increased over time. The different variants such as the C/N ratio of the biodegradable self-supporting material and/or the organic chelate of potassium fertilizer can make the humification or mineralization phenomena prevail in biodegradation according to the desired cultivation requirements. The above agronomic technique can be carried out irrespective of the pedoclimatic conditions, solving the problem of the impracticability of the soils, such as after a strong storm and thus allowing cultivation plants in the desired timings. With this agronomic technique, the soil is also physically protected from erosion or compaction phenomena, together with the protection and regeneration of fertility, high water savings and the creation of ideal habitats for microorganisms, insects or useful animals (e.g. earthworms). The above-mentioned agronomic technique by using the biodegradable self-supporting material as described above has an extreme ease of manufacture and can be carried out by a biological farming method.

The agronomic use of organic fertilizer potassium chelate and biodegradable self-supporting material according to this agronomic technique is functionally connected in a new system for capturing and storing CO₂ in the soil with considerable technical, economic and environmental efficiencies. The two products, biodegradable self-supporting material and organic chelate of potassium fertilizer, are in fact an accumulation of atmospheric carbon as with the absorption of the plants from the atmosphere, and from them the production of solid organic waste and/or solid biomasses, while the CO₂ footprint of the reactants and of the transformation process for the production of the above products is respectively zero and minimal. The biological decomposition in the soil of the above two products also occurs with mineralization phenomena with release of CO₂ which, by photosynthesis, is readily absorbed by the plants in cultivation, since such mineralization phenomena temporally accompany the growth of the plants. The same plants in culture also absorb further atmospheric CO₂ and, at the end of the cultivation cycle and their collection, in addition to providing food, also provide residual biomasses usable in a new chemical-physical process of treatment and transformation described in the present invention. The biological decomposition of the biodegradable self-supporting material and of the organic chelate of potassium fertilizer also involves humification phenomena with carbon accumulation in stable form in the soil in the form of humus. The biological degradation of the above two products can also be deliberately directed toward mineralization or humification, or the prevalence of one phenomenon on the other can be determined simply by choosing the biodegradable self-supporting material and/or the organic chelate of potassium fertilizer with a suitable and desired C/N ratio. Considering an average duration of the biodegradable self-supporting material of about six months and following at the end of the culture and/or at the end of the product, the self-supporting biodegradable material is again laid and layered with a new self-supporting biodegradable material on the previous one, a considerable storage of carbon in stable form in the soil such as humus can easily be estimated. It is therefore storage of atmospheric CO₂ through the intercession of the plants which have stored it and from them the production of solid biomasses and/or solid organic wastes of any kind which are transformed into new organic chelate of potassium fertilizer and into new biodegradable self-supporting material.

### Examples of realization

Ultimately the chemical-physical process for the treatment and transformation of solid organic waste and/or solid biomasses with production of an organic fertilizer and a biodegradable self-supporting material and their use, described in the present invention, has the advantage of being adaptable for any agronomic need, since the above products are such as to satisfy all possible and variable requirements of C/N and pH of the different cultures in relation to all possible types of cultivation media or substrates intended for such cultures.

### Example 1

It is supposed to treat agricultural residues and in the specific case of the example said residues are represented by wheat straw.

The physical characterization of the biomass is carried out. It is not necessary to grind the biomass, in the specific case of the example with wheat straw, since this biomass is such as to allow the potassium carbonate solution to permeate inside the organic matrix itself.

The characterization of the moisture content and the C/N ratio is carried out, on the basis of tabular data known for each type of biomass or with data obtained analytically from samples upstream of the process. In the specific case and for the explanatory purposes of the example, for wheat straw, said value is hypothetical C/N = 80.

This value C/N = 80 suggests that it is advantageous for the cultivation of legumes, and will therefore tend to make the products of the process, useful for this culture, acquire optimal pH values considering also the types of media to which this culture is intended, understood as such neutral media, acids or alkaline media. In the specific case of the example, it has been preset according to what has been said to reach a pH value of 6.2 of the two organic fertilizer products and biodegradable self-supporting material. Then the treatment of said wheat straw follows by immersion in aqueous potassium carbonate solution having pH = 11.6 (value for the purposes of explanatory example) with room temperature equal to 23°C (value for the purposes of explanatory example) and then for a period of 16 days, and in a hermetically closed silo such as to ensure absence of oxygen; recovery of the biomass, following treatment, having reached equilibrium with said solution a pH value = 11.3 (value for the purposes of explanatory example) and subsequent pressing and molding in the form of panels of alkaline self-supporting material provided with holes adapted for housing the seeds of the selected culture and drying of said panels; filtration of the alkaline solution with recovery of the alkaline organic filtrate; treatment of the panels with the citric acid solution having pH = 1.7 (value for the purposes of explanatory example) such as to lower the pH of the panels from the value 11.3 to
the predetermined value 6.2; recovery of the CO₂ generated in the previous step and reaction with the organic alkaline filtrate such as to lower its pH from a value of 11.3 to a value of 8.7 (value for the purposes of explanatory example); filtration of the acid solution with recovery of the organic acid filtrate; addition and reaction of the organic acid filtrate to the organic alkaline filtrate in such proportions as to lower its pH from a value of 8.7 to a predetermined value of 6.2; drying of the panels of biodegradable self-supporting material, predisposed to the pre-sowing and having a known pH which is advantageous for the type of culture and the type of medium on which the culture is to be carried out; drying of the product of the above reaction and addition of the two acid and
alkaline organic filtrates and pelletizing as an organic fertilizer having known pH and advantageous for the type of culture and the type of soil on which the culture is to be carried out. The agronomic use of the two products, organic fertilizer and biodegradable self-supporting material, associated with each other, brings together organic substance, in this specific example, having C/N = 80, impinging as such on the overall C/N ratio of the reference medium, and, in the specific case, by determining a momentary
microbiological seizure of the nitrogen in the soil and thus stimulating and maximizing the natural nitrogen-fixing process by the symbiontic bacteria of the legumes cultures in question. The
agronomic use of the two products brings organic substance, in this s specific example, having pH = 6.2, impinging as such on the total pH of the circulating solution of the reference medium, which, in the specific example, is assumed to have a pH value 7.4 (value for the explanatory example). And therefore lowering this pH value of the circulating solution in a pH range of 6.5 to 7.0, this value being optimal for the culture in question.

### Example 2

It is supposed to treat organic waste from fruit and vegetable markets, forsu (organic fraction of urban solid waste) and mowed lawn grass.

The physical characterization of the biomass is carried out. It is necessary to carry out the crushing of the biomass, in the specific case of the example for the waste coming from fruit and vegetable markets and
for the forsu, so as to allow the potassium carbonate solution to permeate inside the organic matrix itself.

Characterization of the moisture content and the C/N ratio is carried out, on the basis of tabular data known for each type of biomass or with data obtained analytically from samples upstream of the process. In the specific case and for the explanatory purposes of the example, the average value weighted to the quantitative proportions of the types of biomass is considered and said value is hypothetical C/N = 27.

This value C/N = 27 suggests that it is advantageous for horticultural crops such as solanaceae, brassicaceae or cucurbitaceae (and many other vegetable families), and will therefore tend to make the process products useful for such crops acquire, the optimal pH values also considering the types of media intended for such cultures, intended as neutral media, acids or alkaline media. In the specific case of the example, it has been preset according to what has been said to reach a pH = 7.3 of the two organic fertilizer products and biodegradable self-supporting material. The treatment of said mixed biomasses then follows by immersion in an aqueous solution of potassium carbonate having pH = 11.8 (value for the purposes of explanatory example) with room temperature equal to 25 °C (value for the purposes of explanatory example) and then for a period of 15 days, and in a hermetically closed silo such as to ensure absence of oxygen;
recovery of the biomass, following treatment, having reached equilibrium with said solution a pH value = 11.5 (value for the purposes of explanatory example) and subsequent pressing and molding in the form of panels of alkaline self-supporting material provided with holes adapted for housing the seeds of the selected culture and drying of said panels; filtration of the alkaline solution with recovery of the alkaline organic filtrate; treatment of the panels with the citric acid solution having pH = 1.6 (value for the purposes of explanatory example) such as to lower the pH of the panels from the value 11.5 to the predetermined value 7.3; recovery of the CO₂ generated in the previous step and reaction with the organic alkaline filtrate such as to lowerits pH from a value of 11.5 to a value of 8.5 (value for the purposes of explanatory example); filtration of the acid solution with recovery of the organic acid filtrate; addition and reaction of the organic acid filtrate to the organic alkaline filtrate in such proportions as to lower its pH from a value of 8.5 to a predetermined value of 7.3; drying of the panels of biodegradable self-supporting material, predisposed to the pre-sowing and having known pH and advantageous for the type of culture and the type of medium on which the culture itself is to be carried out; drying of
the product of the above reaction and addition of the two acid and alkaline organic filtrates and pelletizing as an organic fertilizer having known pH and advantageous for the type of culture and the type of soil on which the culture is to be carried out. The agronomic use of the two products, organic fertilizer and biodegradable self-supporting material, associated with each other, brings together organic substance, in this specific example, having C/N = 27, impinging as such on the overall C/N ratio of the reference medium, and, in the specific case,
determining a natural organic availability of nitrogen in the soil. The agronomic use of the two products brings organic substance, in this specific example, having pH = 7.3, impinging as such on the total pH of the circulating solution of the reference medium, which, in the specific example of the example, is assumed to have a pH value 6.0 (value for the explanatory example). And therefore raising this pH value of the circulating solution in a pH range of 6.4 to 7.0, this value being optimal for the culture in question.

In the embodiments described above, certain characteristics can be interchanged with other characteristics present in other embodiments, however, all characteristics falling within the scope of the inventive concept of the invention.

In addition to solving the problems described in the description, the present invention offers the following advantages:
- direct use of solid organic waste and/or solid biomasses
- use of safe reagents for human health and the environment
- use of reagents whose production does not contribute to increasing concentrations of carbon dioxide in the atmosphere
- use of reagents such as to treat "solid" types of biomasses or organic wastes while ensuring their sanitization and absence of phytotoxicity in the products
- chemical-physical process for the treatment and transformation of solid organic waste and/or solid biomasses at zero CO₂ emissions
- complete recovery of water at each cycle of the chemical-physical process for treatment and the transformation of solid organic waste and/or solid biomasses
- chemical-physical process for the treatment and transformation of solid organic waste and/or solid biomasses having low operating temperatures equal to room temperature (25 °C)
- chemical-physical process for the treatment and transformation of solid organic waste and/or solid biomasses without odor emissions
- plant for the chemical-physical process for the treatment and transformation of solid organic waste and/or solid biomasses structurally simple and economical
- absence of synthetic chemical compounds, glues, binders or structural aids in biodegradable self-supporting material
- the extreme adaptability of the two products, organic fertilizer and biodegradable self-supporting material, in the agronomic field for any crop and for any type of soil
- high density of cultivation plant and maximum yields of agricultural production even with the organic farming method
- easy realization of plant consociations and crop changes
- minimum irrigated and plant protection agronomic interventions
- absence of mechanical processing agricultural land and crop-making mechanical care with considerable economic savings
- regeneration of agricultural soil fertility by promoting the creation of habitats for microorganisms, useful insects and animals
- significant organic substance input in agricultural soils with carbon accumulation in the form of humus
- increased power of agricultural soils
- maximized natural nitrogen-fixing process in agricultural soil
- creation of high natural value agricultural areas

## Claims

1. Chemical-physical process for the treatment and transformation of solid organic waste and/or solid biomass **characterised by** the fact that the phases of the chemical-physical process in order of execution are:
a) denaturation and basic hydrolysis in aqueous solution of solid organic waste and/or solid biomass;
b) pressing of the products of step a) having a high degree of polymerisation, and subsequent drying with the production of an alkaline biodegradable self-supporting material;
c) filtration of the products of step a) having a low degree of polymerisation, with recovery of an alkaline organic filtrate and optional drying;
d) reduction of the pH value of the self-supporting biodegradable alkaline material, by immersion in an aqueous acid solution, and subsequent drying;
e) reducing the pH value of the alkaline organic filtrate in aqueous solution with the carbon dioxide produced in step d);
f) filtration of the reaction products of step d), with recovery of an acid organic filtrate;
g) reaction in aqueous solution of the alkaline organic filtrate with the acidic organic filtrate, filtration and drying.

2. Chemical-physical process for the treatment and transformation of solid organic waste and/or solid biomass, according to claim 1, **characterised by** the fact that said steps a) b) c) may alternatively not be followed by steps d) e) f) g).

3. Chemical-physical process for the treatment and transformation of solid organic waste and/or solid biomass, according to claims 1, 2, **characterised by** the fact that said step a) provides for denaturation and basic hydrolysis the use of potassium carbonate in aqueous solution having a pH value greater than 11 and in the absence of oxygen for a period of time from 10 to 20 days at room temperature in the range from about 15 °C to about 35 °C.

4. Chemical-physical process for the treatment and transformation of solid organic waste and/or solid biomass, according to claims 1, 2, **characterised by** the fact that said step d) provides for the reduction of the pH value the use of citric acid in aqueous solution with a pH value lower than 1.8.

5. Organic fertilizer, obtainable according to the process of claims 1, 2, 3, 4, consisting of the hydrolysis and denaturation products having a low degree of polymerisation and **characterised by** the fact that it is an organic potassium chelate with different known pH values and different known C/N ratio values, composed of an organic component, an organic component with potassium chelate, organic carbonates and traces of potassium carbonate and/or potassium bicarbonate and/or citric acid.

6. Biodegradable self-supporting material, obtainable according to the process of claims 1, 2, 3, 4, consisting of denatured and hydrolysed organic structures having a high degree of polymerisation and **characterised by** different known pH values and different known C/N ratio values.

7. Biodegradable self-supporting material, obtainable according to the process of claims 1, 2, 3, 4, and according to claim 6, adapted for sowing, mulching and fertilization.

8. Biodegradable self-supporting material, obtainable according to the process of claims 1, 2, 3, 4, and according to claim 6, adapted for mulching and fertilization.

9. Agronomic use, according to claims 5, 6, 7, 8, of the biodegradable self-supporting material, in association or not with the organic fertilizer, by laying it on the surface of agricultural soil.

10. Agronomic use, according to claims 5, 6, of the biodegradable self-supporting material, in association or not with the organic fertilizer, as a cultivation substrate for soilless crops.
